# EUROPEAN PATENT SPECIFICATION

(11) **EP 3 462 354 B1**
(45) Date of publication and mention of the grant of the patent: **08.04.2020**
(21) Application number: 18193848.1
(22) Date of filing: 11.09.2018
(51) Int. Cl.: G06F 21/52, G06F 21/55

(54) **SYSTEM AND METHOD FOR DETECTION OF ANOMALOUS EVENTS BASED ON POPULARITY OF THEIR CONVOLUTIONS**
SYSTEM UND VERFAHREN ZUR DETEKTION VON ANORMALEN EREIGNISSEN AUF BASIS DES ZUSPRUCHS IHRER KONVOLUTIONEN
SYSTÈME ET PROCÉDÉ DE DÉTECTION D'ÉVÉNEMENTS ANORMAUX BASÉS SUR LA POPULARITÉ DE LEURS CONVOLUTIONS

(30) Priority: 29.09.2017 US 201715720334; 22.06.2018 US 201816015654
(43) Date of publication of application: 03.04.2019
(73) Proprietor: AO Kaspersky Lab, Moscow 125212 (RU)
(72) Inventor: MONASTYRSKY, Alexey V., 125212 MOSCOW (RU); PAVLYUSHCHIK, Mikhail A., 125212 MOSCOW (RU); ROMANENKO, Alexey M., 125212 MOSCOW (RU); GOLOVKIN, Maxim Y., 125212 MOSCOW (RU)
(74) Representative: Chimini, Francesco

(56) References cited:
- US-A1- 2017 124 319
- US-B1- 8 839 435
- US-B1- 9 166 997
- US-B1- 9 355 247

## Description

### Field of Technology

The present disclosure relates generally to the field of computer security and, more particularly, to a system and method for protecting computer devices against the exploitation of vulnerabilities present in the device software.

### Background

With the current widespread use and variation of software applications in today's technology world, one of the most widespread methods of penetrating computer devices with malicious software involves the exploitation of vulnerabilities present in the software installed on the particular device.

To prevent the exploitation of vulnerabilities, companies and/or individuals will use both passive methods in the form of eliminating the vulnerabilities themselves and active methods in the form of detecting the actual exploiting of vulnerabilities. Passive methods are used for already known vulnerabilities, whereas active methods are used for both known and unknown vulnerabilities.

Existing detection technologies are in fact capable of detecting the actual exploiting of a vulnerability with the use of known techniques and mechanisms, but unfortunately these methods are not able to detect and prevent new techniques of exploitation of vulnerabilities that employ new principles and mechanisms of exploitation. For example, in order to make the execution of shellcodes (i.e., a small piece of code used as the payload in the exploitation of a software vulnerability) impossible, technologies have been developed that prevent execution in the stack, but in their place techniques of return-oriented programming have appeared. In general, return-oriented programming are computer security exploit techniques that allows an attacker to execute code in the presence of security defenses such as non-executable memory and code signing. Examples of known detection technologies are disclosed in US 2017/124319 A1, US 9166997 B1, US 8839435 B1.

The existing defensive technologies have proven to be powerless against return-oriented programming. Thus, new solutions, for example, as described in U.S. Patent Publication No. 2016/0196428, have been developed to protect against these attacks. In view of these new solutions, there remains a need to detect a deviation in the functioning of a computer system from normal operation, which might indicate that the system has been attacked by a technique of exploiting a vulnerability in the software. The solving of this problem would make it possible to move away from the techniques of exploitation of vulnerabilities themselves, which are changing and improving, to focus on external symptoms of an attack, which remain the same when the techniques change.

### Summary

The present invention is defined by the appended independent claims. Dependent claims constitute embodiments of the invention. The example embodiments of the following description which are not covered by the appended claims are considered as not being part of the present invention.

Accordingly, as disclosed herein, exemplary systems and methods are provided to detect anomalous events occurring in an operating system of a computing device. In particular, the disclosed systems and methods provide for the detection of anomalous events occurring in the operating system of a client device during the process of executing software for the device.

Thus, according to one example, a method is provided for detecting anomalous events occurring in an operating system of a computing device. In this example, the method includes detecting at least one event occurring in the operating system of the computing device during execution of a software process; determining a context of the detected at least one event that has occurred in the operating system during the execution of the software process; forming a convolution of the detected at least one event based on selected features of the determined context of the detected at least one event; determining a popularity of the formed convolution of the detected at least one event by polling a database containing data relating to a frequency of a plurality of detected events occurring in a plurality of client devices, the plurality of detected events corresponding to the detected at least one event; and determining that the detected at least one event is an anomalous event if the determined popularity is below a threshold value.

In another example, the determining of the context of the detected at least one event comprises determining a call stack at a moment of occurrence of the detected at least one event, wherein the call stack provides at least one of a list of procedures and functions being executed at the moment, a list of modules containing the procedures and functions, and types of data and values of all parameters being transferred to the modules.

In another example, the determining of the context of the detected at least one event comprises determining at least one of a dump of an address space of the software process containing code that was being executed at a moment of occurrence of the detected at least one event; data relating to jumps from at least a last branch record and a branch trace store; and a list of modules loaded in the software process before the occurrence of the detected at least one event.

In another example, the forming of the convolution of the detected at least one event comprises at least one of quantization of the selected features of the determined context, sorting of the selected features of the determined context, merging of the selected features of the determined context, grouping of the selected features of the determined context, configuring data sets of the selected features of the determined context, tabularizing values of the selected features of the determined context, calculating values of the selected features of the determined context, data coding of the selected features of the determined context, and normalization of the selected features of the determined context.

In another example, the method includes forming the convolution of the detected at least one event by generating a hash value by convolving the selected features of the determined context into a string; and determining the popularity of the formed convolution by comparing the generated hash value with a list of hash values in the database to determine the frequency of the plurality of detected events occurring in the plurality of client devices.

In another example, the method includes forming the convolution of the detected at least one event by generating a vector by convolving the selected features of the determined context into coordinate values; and determining the popularity of the formed convolution by comparing the generated vector value with a list of vectors in the database to determine the frequency of the plurality of detected events occurring in the plurality of client devices.

In another example, the method includes comparing the formed convolution of the detected at least one event with a list of previously formed convolutions of secure events; and determining that the detected at least one event is an anomalous event if the formed convolution of the detected at least one event is not on the list of previously formed convolutions of secure events.

In another example of the method, the frequency of the plurality of detected events comprises at least one of a total number of the plurality of detected events at a current moment of time when the at least one event is detected and a total number of client devices each experiencing the detected at least one event at the current moment of time.

In another example of the method, the polling of the database comprises at least one of polling of a global database associated with a first plurality of client devices within all accessible subnetworks and polling of a local data associated with a second plurality of client devices within a single subnetwork of devices.

In another example, the method includes at least one of deleting and quarantining the software process when the detected at least one event is determined to be an anomalous event.

In another example, a system is provided for detecting anomalous events occurring in an operating system of a computing device. The system includes a database containing data relating to a frequency of a plurality of detected events occurring in a plurality of client devices; and a software agent that, when executed by a computer processor, is configured to detect at least one event occurring in the operating system of the computing device during execution of a software process, determine a context of the detected at least one event that has occurred in the operating system during the execution of the software process, form a convolution of the detected at least one event based on selected features of the determined context of the detected at least one event; determine a popularity of the formed convolution of the detected at least one event by polling the database containing data relating to the frequency of the plurality of detected events occurring in the plurality of client devices, the plurality of detected events corresponding to the detected at least one event, and determine that the detected at least one event is an anomalous event if the determined popularity is below a threshold value.

In another example, a method is provided for detecting anomalous events occurring in a computing device. In this aspect, the method includes detecting at least one safe event occurring in an operating system of a secure computing device; determining a context of the detected at least one safe event that has occurred in the operating system of the secure computing device; forming at least one convolution of the detected at least one safe event based on selected features of the determined context of the detected at least one safe event; storing, in at least one database, the formed at least one convolution of the detected at least one safe event; detecting at least one unclassified event occurring in an operating system of the computing device during execution of a software process; determining a context of the detected at least one unclassified event that has occurred in the operating system during the execution of the software process; forming a convolution of the detected at least one unclassified event based on selected features of the determined context of the detected at least one unclassified event; and determining whether the detected at least one unclassified event is an anomalous event by comparing the formed convolution of the detected at least one unclassified event with the formed at least one convolution of the detected at least one safe event stored in the at least one database.

In another example, a system is disclosed for detecting anomalous events occurring in a computing device. The system includes at least one database; and a first software agent that, when executed by a computer processor, is configured to detect at least one safe event occurring in an operating system of a secure computing device; determine a context of the detected at least one safe event that has occurred in the operating system of the secure computing device; form at least one convolution of the detected at least one safe event based on selected features of the determined context of the detected at least one safe event; store, in the at least one database, the formed at least one convolution of the detected at least one safe event. Moreover, the system further includes a second software agent that, when executed by a computer processor, is configured to detect at least one unclassified event occurring in an operating system of the computing device during execution of a software process; determine a context of the detected at least one unclassified event that has occurred in the operating system during the execution of the software process; form a convolution of the detected at least one unclassified event based on selected features of the determined context of the detected at least one unclassified event; and determine whether the detected at least one unclassified event is an anomalous event by comparing the formed convolution of the detected at least one unclassified event with the formed at least one convolution of the detected at least one safe event stored in the at least one database.

The above simplified summary of example aspects serves to provide a basic understanding of the present disclosure. This summary is not an extensive overview of all contemplated aspects, and is intended to neither identify key or critical elements of all aspects nor delineate the scope of any or all aspects of the present disclosure. Its sole purpose is to present one or more aspects in a simplified form as a prelude to the more detailed description of the disclosure that follows. To the accomplishment of the foregoing, the one or more aspects of the present disclosure include the features described and exemplary pointed out in the claims.

### Brief Description of the Drawings

The accompanying drawings, which are incorporated into and constitute a part of this specification, illustrate one or more example aspects of the present disclosure and, together with the detailed description, serve to explain their principles and implementations.
**Fig. 1** illustrates a block diagram of a system of monitoring the execution of software installed on a client according to an example.
**Fig. 2** illustrates a flowchart for method of detecting anomalous events based on an evaluation of the popularity of convolutions of events according to an example.
**Fig. 3** illustrates a flowchart for a method of forming a set of convolutions of safe events according to an example.
**Fig. 4** illustrates a flowchart for a method of detecting an anomalous event based on a set of convolutions of safe events according to an example.
**Fig. 5** illustrates an example of a general-purpose computer system (which may be a personal computer or a server) on which the disclosed systems and method can be implemented according to an example.

### Detailed Description

Various aspects are now described with reference to the drawings, wherein like reference numerals are used to refer to like elements throughout. In the following description, for purposes of explanation, numerous specific details are set forth in order to promote a thorough understanding of one or more aspects. It may be evident in some or all instances, however, that any aspect described below can be practiced without adopting the specific design details described below. In other instances, well-known structures and devices are shown in block diagram form in order to facilitate description of one or more aspects. The following presents a simplified summary of one or more aspects in order to provide a basic understanding of the aspects. This summary is not an extensive overview of all contemplated aspects, and is not intended to identify key or critical elements of all aspects nor delineate the scope of any or all aspects.

As described herein, a "module" (or program module) can be considered a program object containing code that expands the functionality of a process that has been initiated, such as an operating system kernel module, or a dynamic library.

As described herein, "convolution" can be considered, for example, an intelligent hash where features of an event are convoluted into a string or also a vector where the features of an event are convoluted into coordinates and the like. In general, it is any object into which the features of an event (hereafter, "features") can be convolved for carrying out mathematical and logic operations on them. For example, the convolving of features is an arbitrary transformation of features into a string representation, a vector representation, or a combination of these.

An "event" as described herein can be an identified manifestation of a certain condition of an operating system, a service or a network. Information about the event may be contained in a software message, for example, from the operating system (or a portion thereof), indicating what has taken place. In other words, events from the operating system include anything "outside" of the program that can affect how the program behaves. It should be appreciated that such events can occur at any time while the program is running, in almost any order. Moreover, according to the example, there can usually be many kinds and types of events in the system, for example, the launching of processes; the loading of modules; file operations; registry operations; and the like. Moreover, in an example, the context of an event is the totality of states of the operating system at the moment of occurrence of the events which directly affect its occurrence. Examples of context content will be indicated below.

In addition, in general, an "anomalous" event is an identified manifestation of a certain condition of an operating system, a service or a network indicating the occurrence of a previously unknown situation. In a particular instance, an anomalous event is a secure event - an identified manifestation of a certain condition of a system, a service or a network indicating a possible violation of the information security policy or a failure of defensive measures, or the occurrence of a previously unknown state which may have a relation to security.

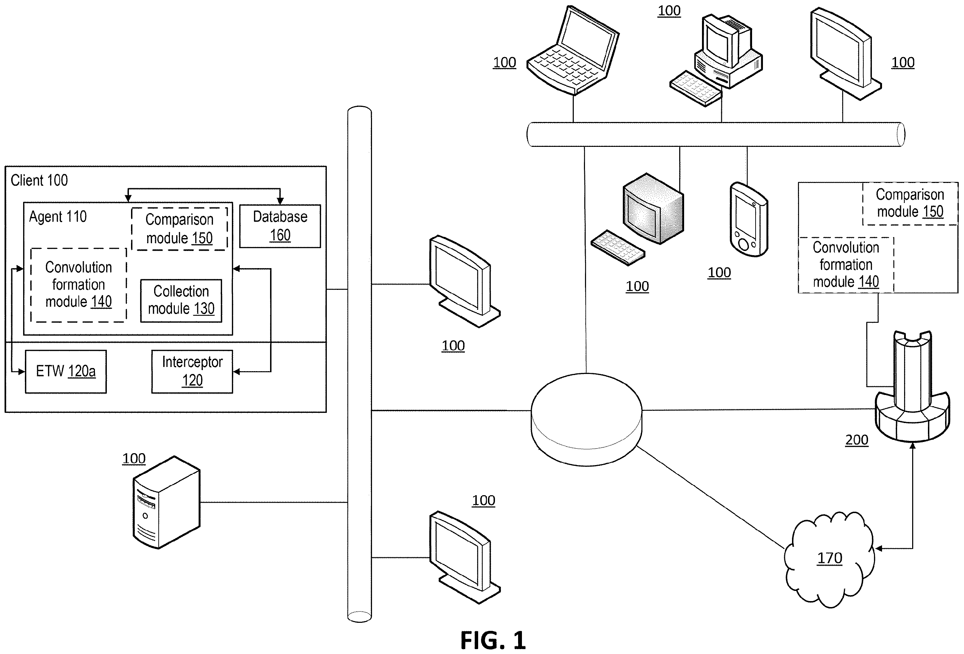

**Fig. 1** illustrates a block diagram of a system of monitoring the execution of software installed on a client according to an example. As shown, a software agent **110** (i.e., an "agent") is installed on the side of the client **100.** Also in the operating system of the client **100,** one or more interceptors **120,** connected to the agent **110,** can be installed. In a particular example, event tracing for windows ("ETW") **120a,** as known to those skilled in the art, can be used as the interceptors. The interceptors **120** are provided is to detect events occurring in the operating system and communicate this detection to the agent **110,** for example, by sending a notification directly to the agent **110,** and/or by an entry in the events log (not indicated in **Fig. 1****,** but stored in the local database **160**) to which the agent **110** has access.

Moreover, the agent **110** may receive notifications either on all possible events in the system which can be detected by the interceptors **120** or only on one kind of events of interest (such as only the launching of processes). The agent **110** can include a collection module **130** that is used after the agent registers an event of interest detected by the interceptors **120.** The collection module **130** obtains the context of the event registered. In a particular instance, the context of the event includes the call stack preceding the occurrence of the event and the dump of the memory section containing the code that was being executed at the moment of occurrence of the event. Using the call stack, one or more of the following can be obtained: at least a list of procedures and functions being executed at the given moment of time, the list of modules containing those procedures and functions, and also the types and values of all parameters being transferred to the modules, for example, upon calling of functions exported by a module. In addition, the context may include information on jumps from at least the Last Branch Record ("LBR") and the Branch Trace Store ("BTS") (as described in Intel® Microarchitecture Codename Nehalem Performance Monitoring Unit Programming Guide) - memory buffers and registers. In this example, the LBR and BTS contain information on the program execution, i.e., the addresses of jumps, execution branches, and the like (otherwise preserving the given traces). In a particular example, the interceptors **120** upon detecting an event preserve its context, which will then be obtained by the collection module **130** of the agent **110** (for example, transferred to the collection module **130** or requested by the collection module **130**) and in such cases the collection module **130** has no need to independently receive the entire required context or a certain portion of it.

According to an example, one or both of the client **110** and the server **200** can further include a convolution formation module **140.** In this example, the context obtained by the collection module **130** is sent to the convolution formation module **140.** In one instance, this may be sent to the convolution formation module **140** present at the client **100,** in another instance it may be sent to the server **200.** The convolution formation module **140** extracts from the received context the features (examples of features will be described below) and forms/generates a convolution. Likewise, the convolution formation module **140** transforms the context of the event (see below). As stated, convolution according to the example is taken in its broadest meaning, not only for a particular hash (where the features are convolved into a string) but also a vector (where the features are convolved into coordinates) and others - in other words, any object into which the features of an event may be convolved in order to carry out mathematical and logic operations on them. The forming of the convolutions of events for any given algorithms may be used in which, for example, hashes for files are formed from the obtained features, for example, as described in Russian Patent Publication No. RU 2,580,036, or vectors can be formed for files, for example, as described in Russian Patent Publication No. RU 2,614,557, or HTML pages.

Furthermore, according to an example, a comparison module **150** may be located either at the server **200** and/or at the client **110.** This comparison module **150** is configured to determine the popularity of the resulting convolution of the event and to compare the resulting convolution with other convolutions, such as convolutions contained in a set of secure convolutions which is kept in a local database **160** or a remote database **170,** interacting as well with the server **200.** The local database **160** also keeps the events log and the context of events previously detected, especially events of loading modules into processes.

The system described above is used for monitoring of the execution of software installed on clients **100.** As a result of such monitoring, anomalous events are detected in the operating system which may be the result of an exploitation of a vulnerability of the software installed on the client **100.** It is noted that the term "client" **100** in the present disclosure is employed in the client-server paradigm, i.e., it is an element of a computing architecture, and not a network one. By client **100** is meant in the present disclosure any computing device in a network which requests through an agent **110** services which are provided by the interface of a server **200,** and by server **200** is meant any computing device with which said agent **110** of a client **100** interacts, obtaining collected data from the agent **110** and sending to it messages and commands (thereby providing services to the client **100**). Next, methods are described that can be implemented by the disclosed for monitoring the execution of software installed on clients **100.**

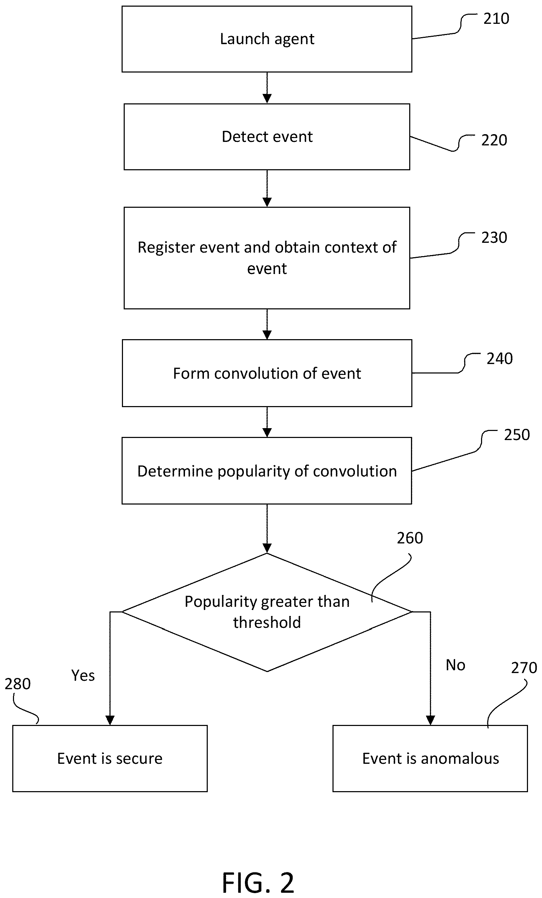

**Fig. 2** illustrates a flowchart for method of detecting anomalous events based on an evaluation of the popularity of convolutions of events according to an example. As shown, in step **210,** there is launched in the operating system at the client **100** side an agent **110** which registers events occurring in the operating system of the client **100** during the execution of processes. Next, in step **220,** interceptors **120** installed in the operating system of the client **100,** and connected to the agent **110,** detect an event occurring in the operating system and report this to the agent **110,** which in step **230** registers the event occurring, and receives with the aid of the collection module **130** the context of that event.

According to an example, the context may include, for example, at least the call stack at the moment of occurrence of the event, where there is obtained from the call stack at least a list of procedures and functions being executed at the given moment of time, a list of modules containing those procedures and functions, and also the types of data and the values of all parameters being transferred to the modules. Moreover, the call stack may include, for example, the dump of the memory section (address space) of the process containing the code which was being executed at the moment of occurrence of the event; information on jumps from at least the LBR and the BTS; and/or a list of modules which were loaded into the process prior to the occurrence of the event, information on this being accessible, for example, in the events log kept in the local database **160.**

Having obtained the context, in step **240** the convolution formation module **140** selects from this the features for formation of the convolution of the event on the basis of these features. Prior to selecting the features, in a particular instance, it is necessary to transform the obtained context. The transformation of a context is a complex of methods and algorithms aimed at optimizing the representation and formats of data from the standpoint of the problems being solved and the goals of the analysis. The transformation of the context does not set itself the goal of changing the informational content of the data which includes the context. The transformation is executed to present the context in such a form that the data may be used most effectively (an example of a transformation shall be given below).

According to example, the transformation of data for performing the convolution can be, for example, quantization; sorting; merging (pasting); grouping; data set configuration; tabularization of values; calculable values; data coding; normalization (scaling).

For example, the call stack (also true of the dump, an example of which is provided below) is transformed in the following way: debugging symbols are obtained for the modules participating in the call stack; the call stack is normalized by the use of the debugging symbols. Before applying the debugging symbols to the results of disassembly of the dump:

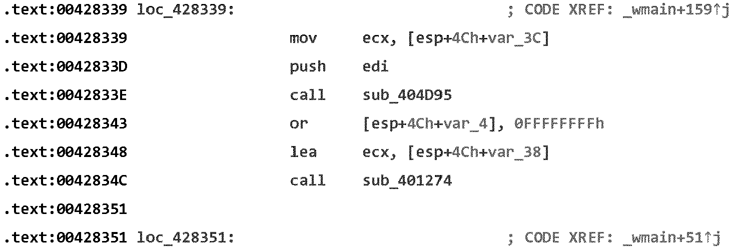

After applying the debugging symbols:

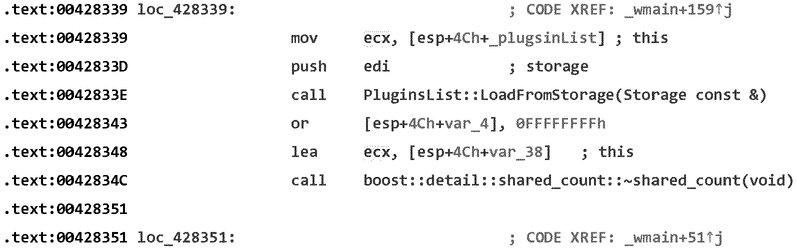

With the help of disassembly and emulation, a set of features is obtained for the obtained dump (presence/absence of indirect calls, position independent code, self-modifying code, and so on). After the transformation, the features are selected and the convolution is formed. As indicated, the features used are: the names of the modules loaded and the sequence of their loading (taken from the events log), the names of the procedures and functions being implemented at the given time, the values of the parameters being transferred to the modules prior to the call for procedures and functions being exported by these modules (taken from the call stack), information on jumps (taken from the dump, LBR, BTS), the presence/absence of indirect calls, position independent code, self-modifying code (dump). The convolution may be formed by any method known from the prior art. The transformation of the context, as well as the formation of the convolution, may be done either at the client **100** side or at the server **200** side (this is true of all methods carried out by the system of monitoring of the execution of software), for the performance of these operations at the server **200** side the context (for the transformation) and the features (for the formation of the convolution) are first sent to the server 200 by the client **100.** In step **250** the popularity of the convolution of the event at the given moment of time is determined. According to the example, the popularity is determined by polling a database (local database **160** or remote database **170**).

Moreover, according to an example, the popularity is considered, as computed by a particular method either the total number of detections of events at the current moment of time whose convolution popularity is being determined; and/or the number of clients **100** on which the given event whose convolution popularity is being determined has been detected at the current moment of time, regardless of the number of detections on the client. In other words, the popularity is being considered for the frequency of a plurality of detected events that correspond to the detected event of the client device 100 to determine how often the event is occurring in the set of the plurality of devices, for example. It should be appreciated that the current moment of time can be considered a certain point of time and over a given period of time (e.g., 1 microsecond, 1 second or the like, for example).

The popularity may also be global (within all accessible subnetworks) or local (popularity only within a certain subnetwork), for example, within that subnetwork in which the investigated event was detected. Thus, the databases **160** and **170** which are accessed in order to determine the popularity of the convolution of an event save a particular number, which in a particular instance is calculated by the server **200.** In step **260,** the event detected on the client **100** is judged to be anomalous if the popularity of the convolution of the detected event at the current moment of time is below a threshold value. This determination can be performed by the agent on the client device **100** (e.g., comparison module **150**) and/or the comparison module **150** on the server **200,** for example. If the popularity is greater than the threshold as determined at step **260,** the event is determined to be secure at step **270.** Otherwise, if the popularity is less than the threshold, the event is deemed anomalous at step **280.** Appropriate action may be taken by the client **100** based on the determination of whether the detected event is anomalous as further described herein.

According to an example, there may be several techniques used to determine whether the detected event is anomalous. For example, the detected event can be determine to be anomalous if, for example, the local popularity of the convolution of the event is below a threshold value; the global popularity of the convolution of the event is below a threshold value; and/or the local and global popularity of the convolution of the event is below a threshold value.

The threshold values for the global popularity of the convolution of the event and the popularity in the subnetwork (local) are assigned independently. The events judged as being anomalous will be further investigated later on and if necessary they will be blocked on the clients **100** by the agent **110.** For example, if the detected events are determined to be anomalous, the client device **100** (and/or agent **110**) can be configured to perform a remediation action, such as, for example, deleting the software process that performed the anomalous event(s), quarantining that software process and/or alerting a user of the client device **110** that the software process may be malicious.

The system for monitoring the execution of software is also used to form the convolutions of secure events (consequently, this system may be used to obtain the convolution of any given event) and a set of convolutions of secure events. The set may already exist and then it is merely supplemented when carrying out the method, or it may also be absent and be created in the process of carrying out the method and will start to be filled up.

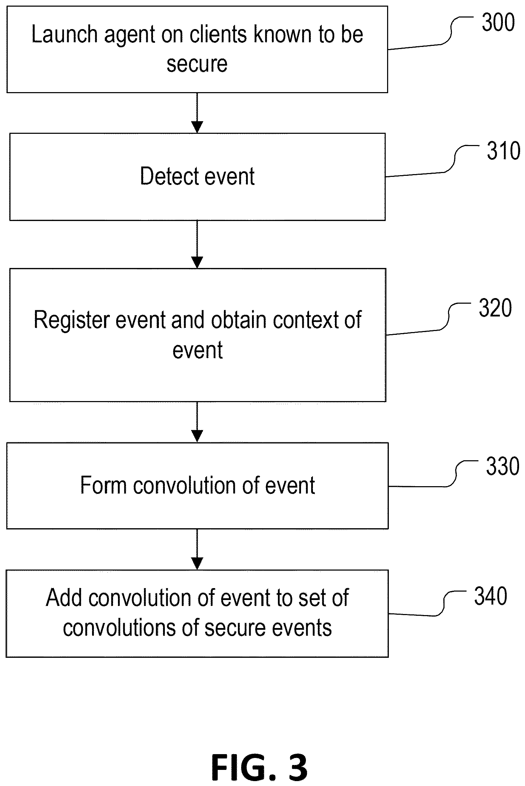

**Fig. 3** illustrates a flowchart for a method of forming a set of convolutions of safe events according to an example. As used herein, "secure events" can be considered "safe" events whose occurrence is not the result of an exploitation of a vulnerability or the execution of a malicious software. In step **300,** there is launched in the operating system on the side of at least one client **100** known to be secure (a secure client is a client not containing malicious software and not able to be attacked in the process of implementing the method by the exploitation of a vulnerability), an agent **110** (e.g., a first software agent) that registers events of at least one kind that occur in the operating system of the client **100,** where the kinds of events may be one or more of: launching of processes; loading of modules; file operations; registry operations; and the like.

In step **310,** the interceptors **120** installed in the operating system of the client **100,** and connected to the agent **110,** detect an event occurring in the operating system. Next, at step **320,** the agent **110** registers the event occurring and obtains by the collection module **130** of the agent **110** the context of that event, one possible makeup of the context having been presented above. From the context, in step **330,** the convolution formation module **140** selects the features and on the basis of the features selected it forms the convolution of the event, then adds the convolution of the event to the set of convolutions of secure events at step **340.** In a particular instance, steps **330** to **340** are executed on the server **200** (for which the context obtained from the clients **100** in step **320** is relayed to the server in "raw" or already transformed form), and the set of convolutions of secure events is kept in the remote database **170** and may afterwards be loaded onto any given client **100,** or the client **100** may organize a polling of the database **170,** without loading the entire set into the local database **160.**

The sets of convolutions of secure events are used to detect anomalous events on clients **100.** The set itself may be stored either locally in the database **160** or remotely in the remote database **170,** which may be accessed by the client **100.**

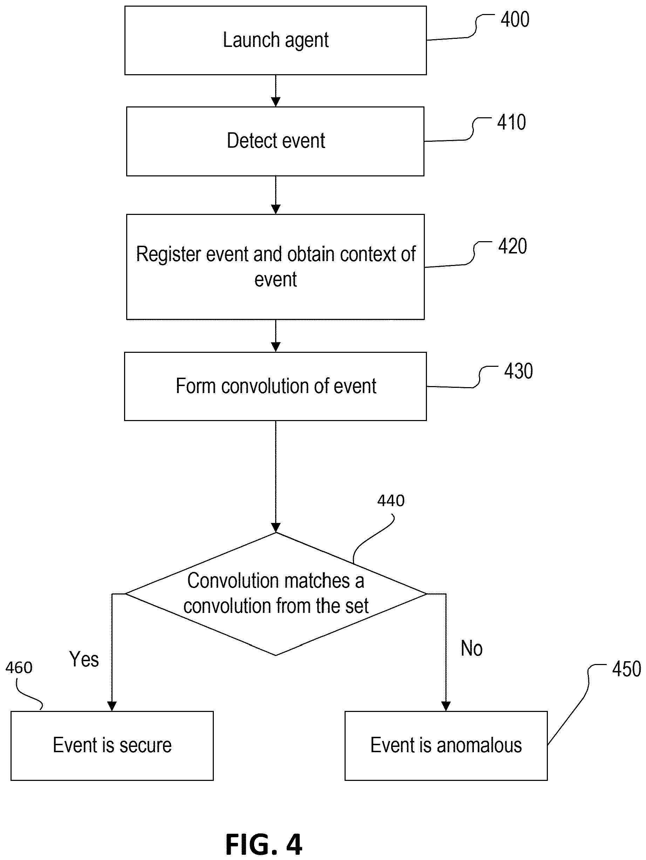

**Fig. 4** illustrates a flowchart for a method of detecting an anomalous event based on a set of convolutions of safe events according to an example. Likewise, as in all other methods, in step **400** there is launched in the operating system at the client **100** side another agent **110** (e.g., a second software agent) that registers events occurring in the operating system of the client **100,** in step **410** the interceptors **120** installed in the operating system and connected to the agent **110** detect the event which has occurred in the operating system. For example, in the example, these new events can be considered "unclassified" as they have not yet determined whether to be anomalous or safe/secure. Next at step **420,** the agent **110** registers the unclassified event occurring and obtains the context of that event, one possible makeup of the context having been presented above. From the context, in step **430,** the features are selected and on the basis of the features selected the convolution of the unclassified event is formed. The obtained convolution of the unclassified event is compared in step **440** with the group of previously formed convolutions of secure/safe events from the set formed by the method described above. Next, at step **450,** the unclassified event is judged to be anomalous if, upon comparison, the formed convolution of the detected event does not match up with any convolution of an event from the group of convolutions of events from the indicated set of secure/safe events. Otherwise, the unclassified event is deemed secure as shown at step **460,** for example. In one example, if the unclassified event is determined to be anomalous, the software process associated with the unclassified event can be deleted or quarantined from the client device.

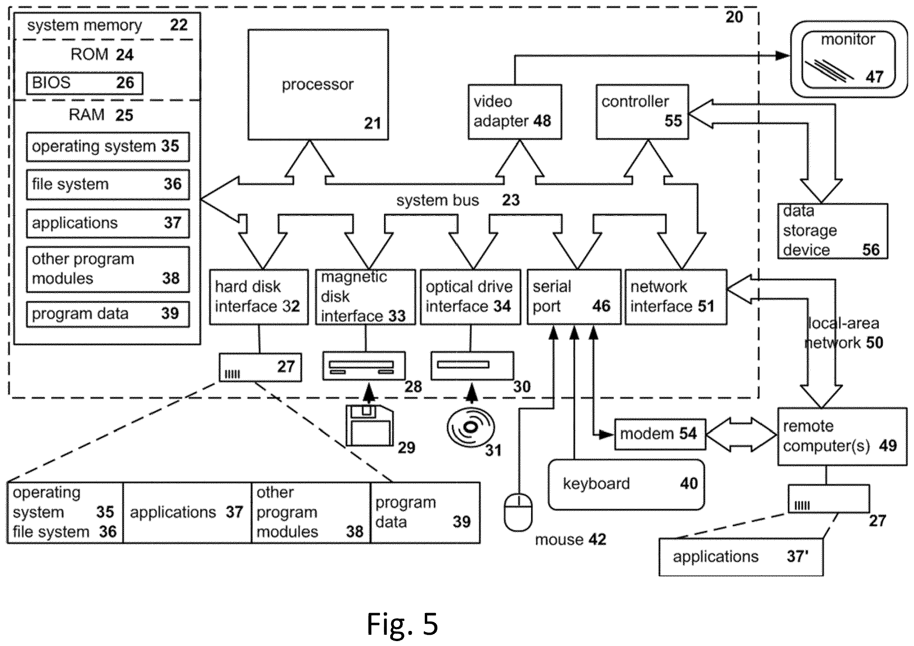

In general, in the present disclosure, by agent **110,** interceptors **120,** collection module **130,** convolution formation module **140,** and comparison module **150** can be implemented using, for example, real devices, systems, components, a group of components realized with the use of hardware, such as integrated microcircuits (application-specific integrated circuits (ASIC)) or field-programmable gate arrays (FPGA)) or, for example, in the form of a combination of software and hardware, such as a microprocessor system and set of program instructions, and also on neurosynaptic chips. The functionality of the agent **110,** the interceptors **120,** the collection module **130,** the convolution formation module **140,** and the comparison module **150** may be realized exclusively by hardware, and also in the form of a combination, where some of the functionality is realized by software, and some by hardware. In some examples, a portion of the agent **110,** the interceptors **120,** the collection module **130,** the convolution formation module **140,** and the comparison module **150** may be implemented on the processor of a general-purpose computer (such as that shown in **Fig. 5** and described below), which also applies to both the client 100 and the server **200.**

Specifically, **Fig. 5** illustrates an example of a general-purpose computer system (which may be a personal computer or a server) on which the disclosed systems and method can be implemented according to an example. As shown, the computer system **20** includes a central processing unit **21,** a system memory **22** and a system bus **23** connecting the various system components, including the memory associated with the central processing unit **21.** The system bus **23** is realized like any bus structure known from the prior art, including in turn a bus memory or bus memory controller, a peripheral bus and a local bus, which is able to interact with any other bus architecture. The system memory includes read only memory (ROM) **24** and random-access memory (RAM) **25.** The basic input/output system (BIOS) **26** includes the basic procedures ensuring the transfer of information between elements of the personal computer **20,** such as those at the time of loading the operating system with the use of the ROM **24.**

The personal computer **20,** in turn, includes a hard disk **27** for reading and writing of data, a magnetic disk drive **28** for reading and writing on removable magnetic disks **29** and an optical drive **30** for reading and writing on removable optical disks **31,** such as CD-ROM, DVD-ROM and other optical information media. The hard disk **27,** the magnetic disk drive **28,** and the optical drive **30** are connected to the system bus **23** across the hard disk interface **32,** the magnetic disk interface **33** and the optical drive interface **34,** respectively. The drives and the corresponding computer information media are power-independent modules for storage of computer instructions, data structures, program modules and other data of the personal computer **20.**

The present disclosure provides the implementation of a system that uses a hard disk **27,** a removable magnetic disk **29** and a removable optical disk **31,** but it should be understood that it is possible to employ other types of computer information media **56** which are able to store data in a form readable by a computer (solid state drives, flash memory cards, digital disks, random-access memory (RAM) and so on), which are connected to the system bus **23** via the controller **55.**

The computer **20** has a file system **36,** where the recorded operating system **35** is kept, and also additional program applications **37,** other program modules **38** and program data **39.** The user is able to enter commands and information into the personal computer **20** by using input devices (keyboard **40,** mouse **42**). Other input devices (not shown) can be used: microphone, joystick, game controller, scanner, and so on. Such input devices usually plug into the computer system **20** through a serial port **46,** which in turn is connected to the system bus, but they can be connected in other ways, for example, with the aid of a parallel port, a game port or a universal serial bus (USB). A monitor **47** or other type of display device is also connected to the system bus **23** across an interface, such as a video adapter **48.** In addition to the monitor **47,** the personal computer can be equipped with other peripheral output devices (not shown), such as loudspeakers, a printer, and so on.

The personal computer **20** is able to operate within a network environment, using a network connection to one or more remote computers **49.** The remote computer (or computers) **49** are also personal computers or servers having the majority or all of the aforementioned elements in describing the nature of a personal computer **20.** Other devices can also be present in the computer network, such as routers, network stations, peer devices or other network nodes.

Network connections can form a local-area computer network (LAN) **50,** such as a wired and/or wireless network, and a wide-area computer network (WAN). Such networks are used in corporate computer networks and internal company networks, and they generally have access to the Internet. In LAN or WAN networks, the personal computer **20** is connected to the local-area network **50** across a network adapter or network interface **51.** When networks are used, the personal computer **20** can employ a modem **54** or other modules for providing communications with a wide-area computer network such as the Internet. The modem **54,** which is an internal or external device, is connected to the system bus **23** by a serial port **46.** It should be noted that the network connections are only examples and need not depict the exact configuration of the network, i.e., in reality there are other ways of establishing a connection of one computer to another by technical communication modules, such as Bluetooth.

In various aspects, the systems and methods described herein may be implemented in hardware, software, firmware, or any combination thereof. If implemented in software, the methods may be stored as one or more instructions or code on a non-transitory computer-readable medium. Computer-readable medium includes data storage. By way of example, and not limitation, such computer-readable medium can comprise RAM, ROM, EEPROM, CD-ROM, Flash memory or other types of electric, magnetic, or optical storage medium, or any other medium that can be used to carry or store desired program code in the form of instructions or data structures and that can be accessed by a processor of a general purpose computer.

In the interest of clarity, not all of the routine features of the aspects are disclosed herein. It will be appreciated that in the development of any actual implementation of the present disclosure, numerous implementation-specific decisions must be made in order to achieve the developer's specific goals, and that these specific goals will vary for different implementations and different developers. It will be appreciated that such a development effort might be complex and time-consuming, but would nevertheless be a routine undertaking of engineering for those of ordinary skill in the art having the benefit of this disclosure.

Furthermore, it is to be understood that the phraseology or terminology used herein is for the purpose of description and not of restriction, such that the terminology or phraseology of the present specification is to be interpreted by the skilled in the art in light of the teachings and guidance presented herein, in combination with the knowledge of the skilled in the relevant art(s). Moreover, it is not intended for any term in the specification or claims to be ascribed an uncommon or special meaning unless explicitly set forth as such.

## Claims

1. A method for detecting anomalous events in an operating system of a computing device, comprising:
detecting (220), by at least one interceptor (120), an event occurring in the operating system associated with execution of a software process;
registering (230), by an agent (110), the detected event and obtaining a context of the event associated with execution of the software process, the context of the event comprising a stack of calls at a time of occurrence of the event;
transforming the context of the event;
obtaining from the transformed context of the event the following features: a list of procedures and functions being executed at a given time, a list of modules containing the procedures and functions, and types of data and values of all parameters being transferred in each module in the list of modules;
generating (240) a hash value of the event based on the features obtained from the transformed context of the event;
determining (250) a popularity of the generated hash value of the event using a comparison module (150) by comparing the generated hash value with a list of hash values in a database (160) to determine the frequency of the plurality of detected events occurring in a plurality of client devices; and
classifying (260) the detected event as anomalous in response to determining that the popularity of the generated hash value is below a threshold value.

2. The method according to claim 1, wherein the context of the event comprises at least one of:
a totality of states of the operating system at a time of occurrence of the event directly influencing its occurrence, in which the events occur at the time of carrying out software processes in the operating system.

3. The method according to claim 1, wherein the context of the event further comprises a list of modules loaded into the software process before the occurrence of the event, wherein the list of modules comprises at least one of a software object containing code which expands the functionality of the started process, a module of the operating system kernel, and a dynamic library.

4. The method according to any of claims 1-3, wherein the context of the event further includes a dump of a memory section of the software process containing code which was executed at a time of occurrence of the event, and the method further comprises:
obtaining from the transformed context of the event, one or more further features including a presence of indirect calls, an absence of indirect calls, positionally independent code, and self-modifying code.

5. The method according to any of claims 1-4, wherein the context of the event further comprises information about jumps from at least one of a Last Branch Record (LBR) facility and a Branch Trace Store.

6. The method according to any of claims 1-5, wherein registering by the agent the detected event and obtaining the context of the event associated with execution of the software process further comprises:
performing the transformation of the obtained context that represents the context in a form allowing an identification of the features of the event.

7. The method according to claim 6, wherein the transformation comprises normalization of the selected features, and in which information about debugging symbols for modules participating in a stack of calls and a dump of memory section associated with the software process is obtained for the normalization.

8. The method according to claim 6, wherein the context is transformed using disassembly and emulation, and wherein the identified features include at least one of a presence of indirect calls, an absence of indirect calls, positionally independent code, and self-modifying code.

9. The method according to any of claims 1-8, wherein the popularity of the hash value is determined in the context of a subnetwork where the computing device on which the event was detected is situated.

10. The method according to any of claims 1-9, wherein determining the popularity of the hash value of the event comprises:
querying a database containing information about the popularity of the hash value of events,
responsive to determining that no information is present as to the popularity in the database, gathering information from a network as to a number of events detected and a total number of clients from which the gathering is being done at present, after which the popularity is calculated.

11. The method according to any of claims 1-10, wherein the hash value comprises a hash of the features obtained from the transformed context of the event.

12. A system for detecting anomalous events in an operating system of a computing device, the system comprising:
a client device (100) comprising an agent (110) and at least one interceptor installed in the operating system, wherein the client device is configured to:
detect, by the at least one interceptor (120), an event occurring in the operating system of the client device, the event being associated with execution of a software process; and
register, by the agent of the client device, the detected event and obtaining a context of the event associated with execution of the software process, the context of the event comprising a stack of calls at a time of occurrence of the event; and a server configured to:
transform the context of the event;
obtain from the transformed context of the event the following features:
a list of procedures and functions being executed at a given time, a list of modules containing the procedures and functions, and types of data and values of all parameters being transferred in each module in the list of modules;
obtain a hash value of the event generated based on the features obtained from the transformed context of the event;
determine a popularity of the generated hash value of the event using a comparison module (150) by comparing the generated hash value with a list of hash values in a database (160) to determine the frequency of the plurality of detected events occurring in a plurality of client devices, and
classify the detected event as anomalous in response to determining that the popularity of the generated hash value is below a threshold value.

## Patentansprüche

1. Verfahren zum Detektieren anomaler Vorgänge in einem Betriebssystem einer Rechenvorrichtung, umfassend:
Detektieren (220), durch wenigstens einen Interceptor (120), eines in dem Betriebssystem auftretenden Vorgangs, welcher einer Ausführung eines Softwareprozesses zugeordnet ist;
Registrieren (230), durch einen Agenten (110), des detektierten Vorgangs und Erhalten eines Kontexts des Vorgangs, welcher der Ausführung des Softwareprozesses zugeordnet ist, wobei der Kontext des Vorgangs einen Stapel von Aufrufen zu einer Zeit eines Auftretens des Vorgangs umfasst;
Transformieren des Kontexts des Vorgangs;
Erhalten der folgenden Features von dem transformierten Kontext des Vorgangs: eine Liste von Prozeduren und Funktionen, welche zu einer gegebenen Zeit ausgeführt werden, eine Liste von Modulen, welche die Prozeduren und die Funktionen enthalten, und Typen von Daten und Werte aller Parameter, welche in jedem Modul in der Liste von Modulen transferiert werden;
Erzeugen (240) eines Hash-Wertes des Vorgangs auf Grundlage der von dem transformierten Kontext des Vorgangs erhaltenen Features;
Bestimmen (250) einer Popularität des erzeugten Hash-Wertes des Vorgangs unter Verwendung eines Vergleichsmoduls (150) durch Vergleichen des erzeugten Hash-Wertes mit einer Liste von Hash-Werten in einer Datenbank (160), um die Frequenz der Mehrzahl detektierter Vorgänge zu bestimmen, welche in einer Mehrzahl von Client-Vorrichtungen auftreten; und
Klassifizieren (260) des detektierten Vorgangs als anomal als Reaktion auf ein Bestimmen, dass die Popularität des erzeugten Hash-Wertes unter einem Schwellenwert liegt.

2. Verfahren nach Anspruch 1, wobei der Kontext des Vorgangs wenigstens eines umfasst aus:
einer Gesamtheit von Zuständen des Betriebssystems zu einer Zeit eines Auftretens des Vorgangs, welche sein Auftreten unmittelbar beeinflussen, wobei die Vorgänge zu der Zeit eines Ausführens von Softwareprozessen in dem Betriebssystem auftreten.

3. Verfahren nach Anspruch 1, wobei der Kontext des Vorgangs ferner eine Liste von Modulen umfasst, welche vor dem Auftritt des Vorgangs in den Softwareprozess geladen werden, wobei die Liste von Modulen wenigstens eines aus einem Softwareobjekt, welches einen Code enthält, welcher die Funktionalität des gestarteten Prozesses erweitert, einem Modul des Betriebssystemkernels und einer dynamischen Bibliothek umfasst.

4. Verfahren nach einem der Ansprüche 1-3, wobei der Kontext des Vorgangs ferner einen Dump eines Speicherabschnitts des Softwareprozesses umfasst, welcher einen Code beinhaltet, welcher zu einer Zeit eines Auftritts des Vorgangs ausgeführt worden ist, und das Verfahren ferner umfasst:
Erhalten von dem transformierten Kontext des Vorgangs eines oder mehrerer weiterer Features, welches/welche ein Vorhandensein indirekter Aufrufe, ein Nichtvorhandensein indirekter Aufrufe, einen positionsunabhängigen Code und einen selbstmodifizierenden Code umfasst/umfassen.

5. Verfahren nach einem der Ansprüche 1-4, wobei der Kontext des Vorgangs ferner Informationen über Sprünge von wenigstens einem aus einer Last-Branch-Record (LBR)-Einrichtung und einem Branch-Trace-Store umfasst.

6. Verfahren nach einem der Ansprüche 1-5, wobei das Registrieren des detektierten Vorgangs durch den Agenten und das Erhalten des Kontextes des Vorgangs, welcher einer Ausführung des Softwareprozesses zugeordnet ist, ferner umfassen:
Durchführen der Transformation des erhaltenen Kontextes, die den Kontext in einer Form repräsentiert, welche eine Identifikation der Features des Vorgangs ermöglicht.

7. Verfahren nach Anspruch 6, wobei die Transformation eine Normalisierung der ausgewählten Features umfasst, und wobei Informationen über Debugging-Symbole für Module, welche an einem Stapel von Aufrufen teilnehmen, und einen Dump eines Speicherabschnitts, welcher dem Softwareprozess zugeordnet ist, für die Normalisierung erhalten werden.

8. Verfahren nach Anspruch 6, wobei der Kontext unter Verwendung von Zerlegung und Emulation transformiert wird und wobei die identifizierten Features wenigstens eines aus einem Vorhandensein indirekter Aufrufe, einem Nichtvorhandensein eines indirekter Aufrufe, einem positionsunabhängigen Code und einem selbstmodifizierenden Code umfassen.

9. Verfahren nach einem der Ansprüche 1-8, wobei die Popularität des Hash-Wertes in dem Kontext eines Sub-Netzwerkes bestimmt wird, in welchem sich die Rechenvorrichtung befindet, auf welcher der Vorgang erfasst worden ist.

10. Verfahren nach einem der Ansprüche 1-9, wobei das Bestimmen der Popularität des Hash-Wertes des Vorgangs umfasst:
Abfrage einer Datenbank, welche Informationen über die Popularität des Hash-Wertes von Vorgängen enthält,
als Reaktion auf ein Bestimmen, dass keine Informationen hinsichtlich der Popularität in der Datenbank vorhanden sind, Sammeln von Informationen von einem Netzwerk hinsichtlich einer Anzahl von detektierten Vorgängen und einer Gesamtanzahl von Clients, von welchen das Sammeln gegenwärtig ausgeführt wird, wonach die Popularität berechnet wird.

11. Verfahren nach einem der Ansprüche 1-10, wobei der Hash-Wert einen Hash der Features umfasst, welche von dem transformierten Kontext des Vorgangs erhalten werden.

12. System zum Detektieren anomaler Vorgänge in einem Betriebssystem einer Rechenvorrichtung, wobei das System umfasst:
eine Client-Vorrichtung (100), welche einen Agenten (110) und wenigstens einen Interceptor umfasst, welcher in dem Betriebssystem installiert ist, wobei die Client-Vorrichtung eingerichtet ist zum:
Detektieren, durch den wenigstens einen Interceptor (120), eines in dem Betriebssystem der Client-Vorrichtung auftretenden Vorgangs, wobei der Vorgang einer Ausführung eines Softwareprozesses zugeordnet ist;
Registrieren, durch den Agenten der Clientvorrichtung, des detektierten Vorgangs und Erhalten eines Kontexts des Vorgangs, welcher der Ausführung des Softwareprozesses zugeordnet ist, wobei der Kontext des Vorgangs einen Stapel von Aufrufen zu einer Zeit eines Auftretens des Vorgangs umfasst; und einen Server, welcher eingerichtet ist zum:
Transformieren des Kontexts des Vorgangs;
Erhalten der folgenden Features von dem transformierten Kontext des Vorgangs: eine Liste von Prozeduren und Funktionen, welche zu einer gegebenen Zeit ausgeführt werden, eine Liste von Modulen, welche die Prozeduren und die Funktionen enthalten, und Typen von Daten und Werte aller Parameter, welche in jedem Modul in der Liste von Modulen transferiert werden;
Erhalten eines Hash-Wertes des Vorgangs, welcher auf Grundlage der von dem transformierten Kontext des Vorgangs erhaltenen Features erzeugt worden ist;
Bestimmen einer Popularität des erzeugten Hash-Wertes des Vorgangs unter Verwendung eines Vergleichsmoduls (150) durch Vergleichen des erzeugten Hash-Wertes mit einer Liste von Hash-Werten in einer Datenbank (160), um die Frequenz der Mehrzahl detektierter Vorgänge zu bestimmen, welche in einer Mehrzahl von Client-Vorrichtungen auftreten; und
Klassifizieren des detektierten Vorgangs als anomal als Reaktion auf ein Bestimmen, dass die Popularität des erzeugten Hash-Wertes unter einem Schwellenwert liegt.

## Revendications

1. Procédé de détection d'événements anormaux dans un système d'exploitation d'un dispositif informatique, comprenant :
la détection (220), par au moins un intercepteur (120), d'un événement survenant dans le système d'exploitation associé à l'exécution d'un processus logiciel ;
l'enregistrement (230), par un agent (110), de l'événement détecté et l'obtention d'un contexte de l'événement associé à l'exécution du processus logiciel, le contexte de l'événement comprenant une pile d'appels au moment de la survenue de l'événement ;
la transformation du contexte de l'événement ;
l'obtention, à partir du contexte transformé de l'événement, des caractéristiques suivantes : une liste de procédures et fonctions en cours d'exécution à un moment donné, une liste de modules contenant les procédures et fonctions, et les types de données et valeurs de tous les paramètres en cours de transfert dans chaque module dans la liste de modules ;
la génération (240) d'une valeur de hachage de l'événement sur la base des caractéristiques obtenues à partir du contexte transformé de l'événement ;
la détermination (250) d'une popularité de la valeur de hachage générée de l'événement à l'aide d'un module de comparaison (150) par la comparaison de la valeur de hachage générée avec une liste de valeurs de hachage dans une base de données (160) pour déterminer la fréquence de la pluralité d'événements détectés survenant dans une pluralité de dispositifs clients ; et
la classification (260) de l'événement détecté comme anormal en réponse à la détermination que la popularité de la valeur de hachage générée est inférieure à une valeur seuil.

2. Procédé selon la revendication 1, dans lequel le contexte de l'événement comprend au moins l'un parmi :
une totalité d'états du système d'exploitation au moment de la survenue de l'événement influençant directement sa survenue, dans lequel les événements surviennent au moment de la mise en œuvre de processus logiciels dans le système d'exploitation.

3. Procédé selon la revendication 1, dans lequel le contexte de l'événement comprend en outre une liste de modules chargés dans le processus logiciel avant la survenue de l'événement, dans lequel la liste de modules comprend au moins l'un parmi un objet logiciel contenant un code qui étend la fonctionnalité du processus démarré, un module du noyau de système d'exploitation et une bibliothèque dynamique.

4. Procédé selon l'une quelconque des revendications 1 à 3, dans lequel le contexte de l'événement inclut en outre un vidage d'une section de mémoire du processus logiciel contenant un code qui était exécuté au moment de la survenue de l'événement, et le procédé comprend en outre :
l'obtention, à partir du contexte transformé de l'événement, d'une ou de plusieurs autres caractéristiques incluant une présence d'appels indirects, une absence d'appels indirects, un code indépendant de la position et un code auto-modifiant.

5. Procédé selon l'une quelconque des revendications 1 à 4, dans lequel le contexte de l'événement comprend en outre des informations concernant des sauts à partir d'au moins l'un parmi une installation de dernier enregistrement de branches (LBR) et d'un stockage de pistes de branches.

6. Procédé selon l'une quelconque des revendications 1 à 5, dans lequel l'enregistrement, par l'agent, de l'événement détecté et l'obtention du contexte de l'événement associé à l'exécution du processus logiciel comprend en outre :
la réalisation de la transformation du contexte obtenu qui représente le contexte sous une forme permettant une identification des caractéristiques de l'événement.

7. Procédé selon la revendication 6, dans lequel la transformation comprend la normalisation des caractéristiques sélectionnées, et dans lequel des informations concernant des symboles de débogage pour des modules participant dans une pile d'appels et un vidage d'une section de mémoire associée au processus logiciel sont obtenues pour la normalisation.

8. Procédé selon la revendication 6, dans lequel le contexte est transformé à l'aide d'un désassemblage et d'une émulation, et dans lequel les caractéristiques identifiées incluent au moins l'un parmi une présence d'appels indirects, une absence d'appels indirects, un code indépendant de la position et un code auto-modifiant.

9. Procédé selon l'une quelconque des revendications 1 à 8, dans lequel la popularité de la valeur de hachage est déterminée dans le contexte d'un sous-réseau où le dispositif informatique sur lequel l'événement a été détecté est situé.

10. Procédé selon l'une quelconque des revendications 1 à 9, dans lequel la détermination de la popularité de la valeur de hachage de l'événement comprend :
l'interrogation d'une base de données contenant des informations concernant la popularité de la valeur de hachage d'événements,
en réponse à la détermination qu'aucune information n'est présente en ce qui concerne la popularité dans la base de données, la collecte d'informations à partir d'un réseau en ce qui concerne un nombre d'événements détectés et un nombre total de clients à partir desquels la collecte est présentement en cours de réalisation, après quoi la popularité est calculée.

11. Procédé selon l'une quelconque des revendications 1 à 10, dans lequel la valeur de hachage comprend un hachage des caractéristiques obtenues à partir du contexte transformé de l'événement.

12. Système de détection d'événements anormaux dans un système d'exploitation d'un dispositif informatique, le système comprenant :
un dispositif client (100) comprenant un agent (110) et au moins un intercepteur installé dans le système d'exploitation, dans lequel le dispositif client est configuré pour :
détecter, par l'au moins un intercepteur (120), un événement survenant dans le système d'exploitation du dispositif client, l'événement étant associé à l'exécution d'un processus logiciel ; et
enregistrer, par l'agent du dispositif client, l'événement détecté et obtenir un contexte de l'événement associé à l'exécution du processus logiciel, le contexte de l'événement comprenant une pile d'appels au moment de la survenue de l'événement ; et
un serveur configuré pour :
transformer le contexte de l'événement ;
obtenir, à partir du contexte transformé de l'événement, les caractéristiques suivantes : une liste de procédures et fonctions en cours d'exécution à un moment donné, une liste de modules contenant les procédures et fonctions, et les types de données et valeurs de tous les paramètres en cours de transfert dans chaque module dans la liste de modules ;
obtenir une valeur de hachage de l'événement générée sur la base des caractéristiques obtenues à partir du contexte transformé de l'événement ;
déterminer une popularité de la valeur de hachage générée de l'événement à l'aide d'un module de comparaison (150) par la comparaison de la valeur de hachage générée avec une liste de valeurs de hachage dans une base de données (160) pour déterminer la fréquence de la pluralité d'événements détectés survenant dans une pluralité de dispositifs clients, et
classifier l'événement détecté comme anormal en réponse à la détermination que la popularité de la valeur de hachage générée est inférieure à une valeur seuil.
